# EUROPÄISCHE PATENTSCHRIFT

(11) **EP 2 783 122 B1**
(45) Veröffentlichungstag und Bekanntmachung des Hinweises auf die Patenterteilung: **17.07.2019**
(21) Anmeldenummer: 12790842.4
(22) Anmeldetag: 13.11.2012
(51) Int. Cl.: F16D 7/04, A47J 43/08

(54) **SICHERHEITSELEMENT FÜR EINE MOTORBETRIEBENE KÜCHENMASCHINE SOWIE KÜCHENMASCHINE**
SAFETY ELEMENT FOR A MOTOR-DRIVEN KITCHEN APPLIANCE AND KITCHEN APPLIANCE
ÉLÉMENT DE SÉCURITÉ POUR UN ROBOT MENAGER À MOTEUR ET ROBOT MENAGER

(30) Priorität: 22.11.2011 DE 102011086851
(43) Veröffentlichungstag der Anmeldung: 01.10.2014
(73) Patentinhaber: BSH Hausgeräte GmbH, 81739 München (DE)
(72) Erfinder: MAZEJ, Stanislav, 3303 Gomilsko (SI); CATER, Matej, 3301 Petrovce (SI); JEGRISNIK, Uros, 3313 Polzela (SI); CERMELJ, Primoz, 4205 Preddvor (SI)
(86) Internationale Anmeldenummer: PCT/EP2012/072486
(87) Internationale Veröffentlichungsnummer: WO 2013/075976

(56) Entgegenhaltungen:
- DE-U1-202008 009 932
- US-A- 5 088 581
- US-A- 5 601 491
- US-A1- 2009 133 980
- US-A1- 2010 108 457

## Beschreibung

### Gebiet der Erfindung

Die Erfindung betrifft ein kraftschlüssiges Sicherheitselement für eine motorbetriebene Küchenmaschine sowie eine Küchenmaschine mit einem solchen Sicherheitselement.

### Hintergrund der Erfindung

Aus US 1,604,243 ist eine Küchenmaschine zur Lebensmittelbearbeitung bekannt, die ein Räderwerk zur Übertragung von Kraft zwischen Motor und Bearbeitungsinstrument und eine zwischengeschaltete Sicherheitseinrichtung umfasst. Diese Sicherheitseinrichtung umfasst eine regulierbare Feder, die ein Zahnrad unter Zwischenschaltung einer Reibungsscheibe gegen einen Flansch presst. Wenn die übertragene Kraft einen voreingestellten Widerstandsgrenzwert übersteigt, verrutschen Zahnrad und Flansch zueinander, so dass der Motor weiterlaufen kann, während das Räderwerk stillsteht, was Bruchschäden und Unfälle vermeidet.

Aus DE 10 2009 006 041 A1 ist eine Küchenmaschine bekannt, die eine in Umfangsrichtung wirkende, mindestens zweistufige Dämpfungseinrichtung aufweist, wobei die zweite, nach Überschreiten eines bestimmten Drehmoments in Wirkung kommende Stufe steifer ausgelegt ist als die erste Stufe. Die erste Stufe ist durch Anordnung einer Weichzone gebildet, die zweite und jede weitere Stufe weisen jeweils eine härte Einstellung als die vorhergehende Stufe auf. In der ersten Stufe ist die Drehmitnahme von der Antriebswelle auf die Abtriebswelle bevorzugt allein über das kraftschlüssig zwischengeschaltete Dämpfungsteil erreicht, während in der zweiten und jeder weiteren Stufe bevorzugt eine rein formschlüssige Anlage von Wellenabschnitten unter Überlaufen der ersten Stufe erfolgt, damit das in der ersten Stufe verwendete, verhältnismäßig weiche Material bei hohen Betriebslasten keiner Schädigung ausgesetzt ist.

Das US-Patent US 5,088,581 offenbart eine unidirektionale Ratschenkupplung mit einem ersten ringförmigen Antriebselement, das umlaufend eine Vielzahl voneinander beabstandende nach innen weisende Vorsprünge aufweist, und einen zweiten ringförmigen Element, das umlaufend eine Vielzahl von voneinander beabstandenden elastischen sich nach außen ersteckenden Finger aufweist, die mit den Vorsprüngen so zusammenwirken, dass sie vorgespannt sind.

### Der Erfindung zugrundeliegende Aufgabe

Der Erfindung liegt die Aufgabe zugrunde, eine Küchenmaschine mit einem kraftschlüssigen Sicherheitselement zu schaffen, das gegenüber dem Stand der Technik vorteilhafte Eigenschaften aufweist. Insbesondere soll das Sicherheitselement aus möglichst wenigen Stücken bestehen, ein geringes Volumen haben und über die Sicherheitsfunktion hinaus einen möglichst großen Zusatznutzen erfüllen.

### Erfindungsgemäße Lösung

Die Bezugszeichen in sämtlichen Ansprüchen haben keine einschränkende Wirkung, sondern sollen lediglich deren Lesbarkeit verbessern. Die Erfindungsaufgabe wird durch ein Sicherheitselement mit den Merkmalen des Anspruchs 1 gelöst.

Ein erfindungsgemäßes Sicherheitselement umfasst ein erstes und ein zweites Kupplungsstück und kann in einer motorbetriebenen Küchenmaschine mit Bearbeitungswerkzeug genutzt werden. Das erste Kupplungsstück ist mit dem zweiten Kupplungsstück über Arme gekoppelt, die kraftschlüssig derart drehfest abgestützt sind, dass sie sich bei Überschreiten eines vorgegebenen Grenzdrehmoments aus dieser drehfesten Lage lösen. Unter Armen sind in diesem Zusammenhang all jene Materialausformungen zu verstehen, die von den Kupplungsstücken abstehen und am jeweils anderen Kupplungsstück kraftschlüssig abgestützt sein können. Beispielsweise können die Arme vom ersten Kupplungsstück abstehen und an der dem ersten Kupplungsstück zugewandten Fläche des zweiten Kupplungsstücks abgestützt sein oder sie können vom zweiten Kupplungsstück abstehen und an der dem zweiten Kupplungsstück zugewandten Seite des ersten Kupplungsstücks abgestützt sein. Auch können die Arme beispielsweise vom ersten Kupplungsstück abstehen und bogenförmig an der dem ersten Kupplungsstück abgewandten Seite des zweiten Kupplungsstücks drehfest abgestützt sein. Es könnten aber auch an beiden Kupplungsstücken Arme vorhanden sein, die zueinander drehfest kraftschlüssig aneinander abgestützt sind und eine Drehmomentübertragung zwischen den beiden Kupplungsstücken bis zu einem vorgegebenen Grenzdrehmoment ermöglichen. Auch sind noch weitere Konstruktionen denkbar, die erfindungsgemäß bis zu einem vorgegebenen Grenzdrehmoment die drehfeste Kopplung zwischen den beiden Kupplungsstücken über kraftschlüssig abgestützte Arme ermöglichen. Die Arme können einteilig mit dem ersten Kupplungsstück oder dem zweiten Kupplungsstück ausgebildet sein. Aber auch eine mehrteilige Konstruktion des Kupplungsstücks, das die Arme aufweist, ist denkbar, bei der die Arme durch eine geeignete stoffschlüssige Verbindung am ersten Kupplungsstück oder am zweiten Kupplungsstück befestigt werden können.

Über das erste und das zweite Kupplungsstück kann die Kraft von einer vom Motor angetriebenen Antriebswelle auf das Werkzeug zur Bearbeitung von Lebensmitteln, beispielsweise zum Schneiden oder Würfeln, übertragen werden. Die Antriebswelle kann drehfest mit dem ersten oder dem zweiten Kupplungsstück verbunden werden. Eine drehfeste Kopplung zwischen dem ersten und dem zweiten Kupplungsstück erfolgt über die Arme, die von mindestens einem der beiden Kupplungsstücke abstehen und kraftschlüssig drehfest am jeweils anderen der beiden Kupplungsstücke abgestützt sind und dieses entsprechend der Rotation der Antriebswelle mitnehmen. Die Haftreibung zwischen den Armen des einen Kupplungsstücks und dem anderen Kupplungsstück bleibt nur bis zu einer bestimmten Lastkraft bestehen, die einem vorgegebenen, zwischen dem ersten und dem zweiten Kupplungsstück zu übertragenden Grenzdrehmoment entspricht, so dass bei höherer Lastkraft Arme und das Kupplungsstück, an dem sie anliegen, gegeneinander zu rutschen beginnen. Hierdurch kann die Übertragung des Drehmoments unterbrochen werden. Das Grenzdrehmoment ist insbesondere durch die übrigen Teile des Antriebs und des Werkzeugs ohne Beschädigung übertragbar und kann derart gewählt werden, dass bei niedrigeren Drehmomenten eine Beschädigung des Motors, des Instruments oder anderer Teile des Werkzeugs oder des Antriebs sicher ausgeschlossen werden kann. Die Arme können insbesondere derart ausgebildet sein, dass bei einer Blockierung des Instruments die Haftreibung zwischen den Armen und dem Kupplungsstück, an dem sie anliegen, zusammenbrechen kann, bevor ein Bruch des Instruments, des ersten oder des zweiten Kupplungsstücks, der Antriebswelle oder eines anderen Teils des Werkzeugs oder des Antriebs auftreten kann, d.h. das Grenzdrehmoment ist insbesondere niedriger als das durch die übrigen Teile des Werkzeugs und des Antriebs maximal übertragbare Drehmoment. Ferner können die Arme insbesondere derart ausgebildet sein, dass die Haftreibung zwischen ihnen und dem Kupplungsstück, an dem sie anliegen, zusammenbricht, bevor der Motor durch eine Erhöhung des Motorstroms aufgrund einer Erhöhung des auf das Instrument übertragenen Drehmoments beschädigt werden kann. Dadurch, dass bei Überschreitung des Grenzdrehmoments die Haftreibung zwischen den beiden Kupplungsstücken der Kupplungseinrichtung zusammenbricht, wird eine wirkungsvolle Drehmomentbegrenzung erreicht. Vorteilhaft kann zudem sein, dass diese Umsetzung der kraftschlüssigen Kopplung im Sicherheitselement sowohl im Leerlauf als auch bis hinauf zur zulässigen Betriebslast eine Übertragung der Kraft des Motors auf die Instrumente ermöglicht und das Sicherheitselement gleichzeitig sehr platzsparend und einfach konstruiert sein kann.

Zudem ist ein Sicherheitselement, das in einer Küchenmaschine verwendet werden kann, erfindungsgemäß, das ein erstes und ein zweites Kupplungsstück umfasst und als Ganzes von der Küchenmaschine gelöst werden kann. Es kann innerhalb eines der Anbauteile oder an einem der Anbauteile der Küchenmaschine, wie z.B. Behälter oder Werkzeug angeordnet und mit diesem entfernbar sein oder auch im Grundgerät, beispielsweise nahe des Motors der Küchenmaschine, am Beginn der vom Motor ausgehenden Antriebswelle oder an einer beliebigen anderen Position zwischen Motor und Bearbeitungswerkzeug mit mittelbarer oder unmittelbarer Verbindung zum Antriebsmechanismus, wenn das Sicherheitselement trotzdem als Ganzes leicht von der Küchenmaschine gelöst werden könnte.

Eine Küchenmaschine ist erfindungsgemäß, wenn sie ein erfindungsgemäßes Sicherheitselement umfasst. Eine solche Küchenmaschine kann beispielsweise zur Nahrungsmittelbearbeitung verwendet werden. Jedoch wäre auch eine Küchenmaschine mit einem erfindungsgemäßen Sicherheitselement erfindungsgemäß, die der Abfallzerkleinerung oder anderen küchenüblichen Aufgaben dienen kann, bei welchen ein Sicherheitselement zur Drehzahlbegrenzung vorteilhaft ist. Eine erfindungsgemäße Küchenmaschine kann ein Gehäuse, einen Motor, einen Bearbeitungsbehälter, wie beispielsweise eine Rührschüssel oder einen Saftbehälter, ein oder mehrere Bearbeitungsinstrumente, einen Deckel und weitere aus Küchenmaschinen bekannte Elemente umfassen.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführungsform weist das Sicherheitselement solche wie oben beschriebenen, kraftschlüssig abgestützten Arme auf und kann gleichzeitig als Ganzes gemäß den vorstehenden Erläuterungen von der Küchenmaschine gelöst werden. Das kann den Vorteil haben, dass das zweite Kupplungsstück des drehmomentbegrenzenden Sicherheitselements mittelbar oder unmittelbar als Träger für das Werkzeug der Küchenmaschine verwendbar wird. Das Sicherheitselement kann also in einer bevorzugten Ausführung im Werkzeug der Küchenmaschine angeordnet sein, kann dort das wirkende Drehmoment begrenzen und mit dem Werkzeug zusammen oder allein leicht von der Küchenmaschine gelöst werden. Auch könnte man alternativ das zweite Kupplungsstück mit der Antriebsachse und das erste Kupplungsstück mit dem Werkzeug verbindbar machen, wobei das Sicherheitselement zur Kopplung der beiden Kupplungsteile ebenfalls die beschriebenen Arme aufweist.

In einer bevorzugten Ausführungsform kann das Sicherheitselement durch das erste Kupplungsstück ein anderes Teil koaxial umgeben und drehfest axial verschiebbar aufnehmen. Beispielsweise könnte dies eine An- oder Abtriebswelle sein, deren Drehmoment auf das Werkzeug übertragen werden soll, welches bevorzugter Weise am zweiten Kupplungsstück des Sicherheitselements fixiert ist. Die Durchstoßöffnung im ersten Kupplungsstück kann beispielsweise drei- bis achteckig sein, um eine drehfeste Aufnahme des Teils zu ermöglichen, dass das erste Kupplungsstück durchstößt. Das durchstoßende Teil könnte dann gleichfalls eckig ausgebildet sein, zumindest abschnittsweise, um seinerseits eine drehfeste Passung zu ermöglichen. Vorteilhaft ist, dass das das erste Kupplungsstück durchstoßende Teil auch bei drehfester Aufnahme relativ zum ersten Kupplungsstück axial verschoben werden kann, wenn der Wellendurchmesser den Öffnungsdurchmesser unterschreitet. Die Vorteile, die sich daraus ergeben, werden im Folgenden noch im Detail erläutert. Ist eine axiale Verschiebbarkeit der Welle nicht erwünscht, so kann die Welle auch in einer runden Öffnung drehfest aufgenommen werden, wenn ihr Durchmesser dem Innendurchmesser der Durchstoßöffnung entspricht und eine axiale Verschiebung durch eine entsprechend große Haftreibung zwischen Welle und erstem Kupplungsstück unterbunden wird. Das gleiche Prinzip ist selbstverständlich auch mit eckigen Öffnungen und einem ebenso geformten Wellenabschnitt denkbar.

Weiterhin ist bevorzugt, dass das erste Kupplungsstück des Sicherheitselements derart bogenförmige Arme aufweist, dass ihre dem zweiten Kupplungsstück zugewandten Seiten in der Aufsicht abschnittsweise auf einer gemeinsamen Kreiskonturlinie liegen. Mit Aufsicht ist in diesem Zusammenhang eine Blickrichtung gemeint, aus der man das Sicherheitselement betrachtet, wenn man entlang einer das erste Kupplungsstück durchstoßenden Welle blickt. Die Arme können senkrecht zur durchstoßenden Welle ausgebildet sein. Alle oder einige Arme könnten aber auch abschnittsweise oder vollständig um einen Winkel mit einem Betrag größer als 0° und kleiner als 90° hinsichtlich der Senkrechten mit Bezug zur durchstoßenden Achse geneigt sein, solange sie trotzdem eine kraftschlüssige Kopplung zwischen dem ersten und dem zweiten Kupplungsstück ermöglichen. Auch könnten Arme mit der gleichen Eigenschaft vom zweiten Kupplungsstück abstehen und am ersten Kupplungsstück anliegen.

Zudem ist bevorzugt, dass die Arme rotationssymmetrisch ausgebildet sind. Dies kann zu einer gleichmäßigen Kräfteverteilung auf alle Arme führen. Eine Symmetrie der Arme ist jedoch nicht zwingend notwendig, solange nur zwischen den Armen und dem Kupplungsstück, an dem sie anliegen, genügend Haftreibung vorhanden ist, um die Küchenmaschine mit dem beabsichtigten Grenzdrehmoment betreiben zu können. Die Kopplung zwischen erstem und zweitem Kupplungsstück kann zusätzlich optimiert werden, indem die Arme oder auch die Seite des Kupplungsstücks, an dem sie anliegen, oder nur diese derart beschichtet werden, dass die Haftreibung zwischen dem ersten und dem zweiten Kupplungsstück gegenüber dem unbeschichteten Zustand verbessert wird. Denkbar wäre auch eine stoffschlüssige Verbindung der beiden Kupplungsteile über ein ein- oder mehrkomponentiges Verbindungsmaterial, das bei Erreichen eines vordefinierten Grenzdrehmoments bricht und so beide Teile entkoppelt.

Gemäß einer bevorzugten Ausführungsform des erfindungsgemäßen Sicherheitselements ist das zweite Kupplungsstück drehfest an einem Bearbeitungswerkzeug der Küchenmaschine fixierbar. Dies ermöglicht die Anordnung des Sicherheitselements im Bearbeitungswerkzeug und kann zum Beispiel einen einfachen Austausch des Sicherheitselements erlauben. Eine Anordnung des Sicherheitselement innerhalb des austauschbaren Werkzeugs der Küchenmaschine ermöglicht im Fall eines Defekts, oder falls eine neuartige Kupplung zum Einsatz gebracht werden soll, einen einfachen Austausch des Sicherheitselements durch Austausch des Werkzeugs. Alternativ könnte man auch das erste Kupplungsstück geeignet einrichten, mit einem Bearbeitungswerkzeug koppelbar zu sein und dann die Achse mit dem zweiten Kupplungsstück verbindbar gestalten.

Bevorzugt ist, dass das erfindungsgemäße Sicherheitselement durch den Benutzer ausgetauscht werden kann. Falls das Sicherheitselement im Bearbeitungswerkzeug angeordnet ist, sollte das Bearbeitungswerkzeug zum Motor hin offen sein oder geöffnet werden können, damit der Benutzer möglichst problemlos das Sicherheitselement vom Werkzeug lösen kann. Entsprechend könnte die Fixierung lösbar durch eine Steckverbindung ineinandergreifender, umlaufender Sägezahn- oder Rechteckprofile an der dem ersten Kupplungsstück abgewandten Fläche des zweiten Kupplungsstücks und dem Bearbeitungswerkzeug oder über Schrauben erfolgen. Die Fixierung könnte allerdings auch permanent sein, um eine maximale Festigkeit der Verbindung sicherzustellen. Dann wäre eine Fixierung mit Nägeln, durch Schweißen, Nieten oder ähnliche Verfahren denkbar. Ist das Sicherheitselement an anderer Stelle der Küchenmaschine angeordnet, so kann es durch geeignete Öffnungen in der Küchenmaschine ebenfalls vom Benutzer ausgetauscht werden.

Gemäß einer weiteren bevorzugten Ausführungsform des Sicherheitselements ist das Sicherheitselement aus Stahl hergestellt. Andere Materialien, zwischen denen gleichermaßen genügend Haftreibung entwickelt werden kann, können allerdings gleichfalls verwendet werden. Erzeugt werden könnte das Sicherheitselement beispielsweise durch laser cutting, Fräsen, Gießen, Stanzen oder ähnliche Methoden.

Das zweite Kupplungsstück des Sicherheitselements weist an der dem ersten Kupplungsstück zugewandten Fläche Wölbungen zum ersten Kupplungsstück hin aufweist, an denen die Arme des ersten Kupplungsstücks kraftschlüssig abgestützt sind. Die Arme können auf diese Auflagepunkte hin eine vordefinierte Kraft ausüben, so dass sie sich bei Erreichen des vordefinierten Grenzdrehmoments aus der drehfesten Lage lösen. Diese Wölbungen können sich vorteilhaft auf den Fertigungsprozess des Sicherheitselements auswirken, weil beispielsweise ohne solche Wölbungen erforderlich sein könnte, die gesamte Umfangslinie des ersten Kupplungsstücks der dem ersten Kupplungsstück zugewandten Seite des zweiten Kupplungsstücks gegenüber genau anzupassen, um über den gesamten Umfang eine nahezu identische Kraftausübung zu ermöglichen.
Jeder Arm des ersten Kupplungsstücks ist jeweils an zwei der Wölbungen an der Innenseite des zweiten Kupplungsstücks abgestützt. So kann eine verbesserte Haftreibung gegenüber der Auflage an einer einzelnen Wölbung erreicht werden. Denkbar wäre aber auch, die Arme an mehr als zwei Wölbungen abzustützen. Dies kann auch von der Art des verwendeten Bearbeitungswerkzeugs, dem gewünschten Grenzdrehmoment oder den Materialeigenschaften des für das Kupplungsmaterial eingesetzten Werkstoffs abhängig gemacht werden. Auch könnten die Arme an zwei Wölbungen am ersten Kupplungsstück drehfest abgestützt sein, falls die Arme vom zweiten Kupplungsstück abstehen.

Das erfindungsgemäße Sicherheitselement weist in einer bevorzugten Ausführungsform radial um die Öffnung im ersten Kupplungsstück, durch die ein Teil axial verschiebbar aufgenommen werden kann, herum eine Mehrzahl von Montagelöchern auf, die in gleichen Winkelabständen angeordnet sind. Diese Anordnung der Montagelöcher kann sich als vorteilhaft erweisen, wenn man koaxial zum ersten Kupplungsstück ein weiteres Werkstück anbringen möchte. Durch die gleichen Winkelabstände kann eine gleichmäßige Befestigung des Werkstücks ermöglicht werden und es könnte daher beispielsweise radialen Scherkräften aus jeder Richtung in gleichem Maße widerstehen. Die Anzahl der Montagelöcher kann sinnvollerweise zwischen zwei und höchstens acht betragen. Sollte es durch die technischen Umstände geboten sein, wäre aber auch eine höhere Zahl an Montagelöchern vorstellbar.

Erfindungsgemäss bietet das Sicherheitselement die Möglichkeit, mit einem weiteren Sicherheitselement verbunden zu werden. Dies brächte den besonders großen Vorteil mit sich, dass nicht nur eine eventuell auftretende Überschreitung eines vordefinierten Grenzdrehmoments, sondern auch weitere Betriebsstörungen zu einer Trennung von Motor und Bearbeitungsinstrumenten führen können. Die im ersten Kupplungsstück axial verschiebbare Welle gegenüber dem Deckel der Küchenmaschine über ein Rückstellelement derart vorgespannt ist, so dass beim Öffnen des Deckels bei laufendem Betrieb der Küchenmaschine die Welle durch das Rückstellelement aus dem Motorraum der Küchenmaschine herausgezogen wird und somit ihr Antrieb gestoppt wird. Um ein solches oder ähnliches, weiteres Sicherheitselement mit dem erfindungsgemäßen Sicherheitselement kombinieren zu können, sind die Montagelöcher des ersten Sicherheitselements zu nutzen. Daran ist eine zylinderförmige Hülle zu montieren, die das besagte Rückstellelement umgibt und dieses wiederum mit der Welle verbindet so dass dieses Rückstellelement, z.B. eine Schraubenfeder, bei Öffnen des Deckels der Küchenmaschine während des Betriebs seine rückstellende Wirkung an der Welle entfalten kann. Aber auch die Nutzung von weiteren Arten von Sicherheitssystemen, die anders konstruiert sind und anderweitig den Benutzer oder die Maschine selbst schützen, kann durch das erfindungsgemäße Sicherheitselement ermöglicht oder erleichtert werden.

### Kurzbeschreibung der Zeichnungen

Weitere vorteilhafte Ausgestaltungen der Erfindung werden nachfolgend an Hand eines in den Zeichnungen dargestellten Ausführungsbeispiels, auf welches die Erfindung jedoch nicht beschränkt ist, näher beschrieben.

Es zeigen schematisch:
- Fig. 1: eine perspektivische Ansicht eines Sicherheitselements, bestehend aus einem ersten und einem zweiten Kupplungsstück.
- Fig. 2: ein teilmontiertes Werkzeug mit einem Sicherheitselement für eine Küchenmaschine.
- Fig. 3: ein fertigmontiertes Werkzeug mit einem Sicherheitselement, das in einer Komponente einer Küchenmaschine angeordnet ist.
- Fig. 4: eine Komponente einer Küchenmaschine, die ein Werkzeug mit Sicherheitselement umfasst.

### Detaillierte Beschreibung einer Ausführung der Erfindung

Bei der nachfolgenden Beschreibung einer bevorzugten Ausführungsform der vorliegenden Erfindung bezeichnen gleiche Bezugszeichen gleiche oder vergleichbare Komponenten

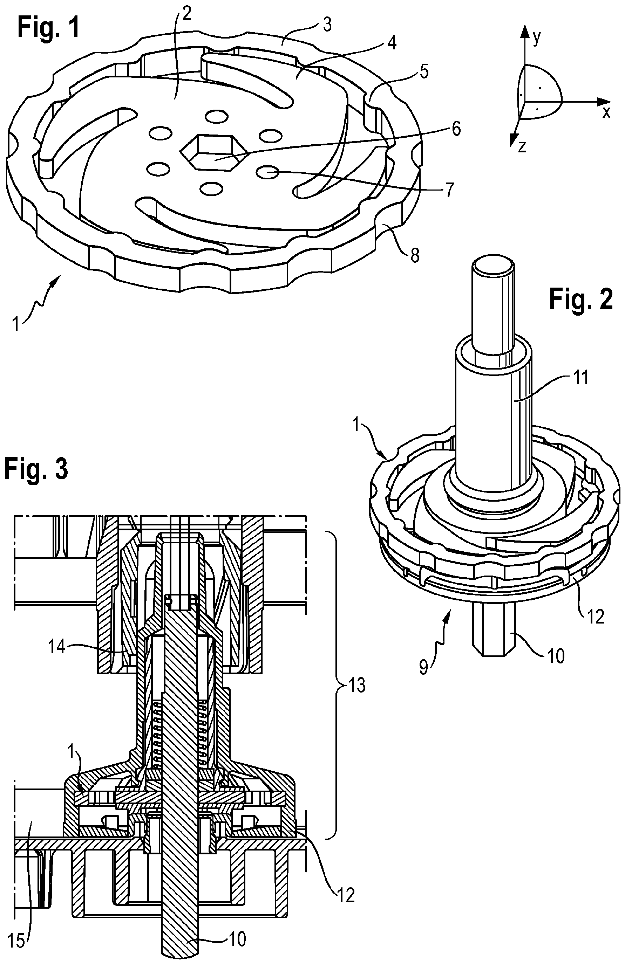

Fig. 1 zeigt ein Ausführungsbeispiel eines erfindungsgemäßen Sicherheitselements 1 für eine motorbetriebene Küchenmaschine. Das Sicherheitselement 1 umfasst ein erstes Kupplungsstück 2 und ein zweites Kupplungsstück 3, die jeweils aus Stahl mit der Werkstoffnummer 1.4310 durch Laserschneiden gewonnen worden sind. Das erste Kupplungsstück 2 weist vier zum Schwerpunkt des ersten Kupplungsstücks 2 rotationssymmetrische Arme 4 auf, die jeweils an zwei von insgesamt zwölf Wölbungen 5 an der Innenseite des zweiten Kupplungsstücks drehfest kraftschlüssig abgestützt sind und vollständig in der x-z-Ebene des für Fig. 1 eingeführten und neben Fig. 1 dargestellten Koordinatensystems liegen. Das erste Kupplungsstück 2 weist in seinem Schwerpunkt darüber hinaus eine sechseckige Öffnung 6 zur drehfesten Aufnahme eines weiteren Teils, beispielsweise einer An- oder Abtriebswelle auf. Dieses Teil ist in diesem Ausführungsbeispiel relativ zum ersten Kupplungsstück 2 axial verschiebbar. Um diese sechseckige Öffnung 6 im Schwerpunkt des ersten Kupplungsstücks 2 herum befinden sich in gleichen Winkelabständen mehrere Montagelöcher 7. Die dem ersten Kupplungsstück 2 abgewandte Seite des zweiten Kupplungsstücks 3 weist eine Mehrzahl von Einbuchtungen 8 hin zum ersten Kupplungsstück 2 auf, in diesem Fall zwölf. Diese erlauben es, das zweite Kupplungsstück 3 an einem Werkzeug drehfest, aber axial verschiebbar und somit auswechselbar zu fixieren.

Fig. 2 zeigt ein teilmontiertes Bearbeitungswerkzeug 9 für eine Küchenmaschine, das ein erfindungsgemäßes Sicherheitselement 1 und Instrumente zur Nahrungsmittelbearbeitung umfasst (nicht dargestellt). Das gezeigte Sicherheitselement 1 entspricht dem in Fig. 1 dargestellten. Das erste Kupplungsstück 2 des Sicherheitselements 1 ist von einer motorisch antreibbaren Welle 10 durchstoßen. Diese hat abschnittsweise eine sechseckige Form entsprechend der Kontur der Öffnung 6 im Schwerpunkt des ersten Kupplungsstücks 2. Deshalb ist die durchstoßende Welle 10 drehfest, aber axial verschiebbar koaxial vom ersten Kupplungsstück 2 umschlossen. Außerdem ist an den Montagelöchern 7 des ersten Kupplungsstücks 2 eine Hülle 11 aus einem Kunststoff montiert. Sie umgibt koaxial die Welle 10, die das erste Kupplungsstück 2 im Schwerpunkt durchstößt. Zwischen Welle 10 und Hülle 11 kann ein Rückstellelement (nicht dargestellt), beispielsweise eine Schraubenfeder, angeordnet werden. Ein Werkzeuggehäuseteil 12, das drehfest am zweiten Kupplungsstück 3 fixiert ist, ermöglicht die Anbringung von Bearbeitungs- oder Rührinstrumenten (nicht dargestellt).

In Fig. 3 ist ein fertig montiertes Werkzeug 13 innerhalb einer motorisch antreibbaren Küchenmaschine zu sehen. Über einen Verbindungsbereich 14 können weitere Werkzeuge 18 mit ihm verbunden werden. Das Werkzeug 13 umfasst eine erfindungsgemäße Sicherheitseinrichtung 1. Vom Werkzeug 13 abgehend sind Instrumente 15 zur Nahrungsmittelbearbeitung angeordnet, und zwar an dem Werkzeuggehäuseteil 12, das drehfest mit dem zweiten Kupplungsstück 3 des Sicherheitselements 1 verbunden ist. Bei Überschreiten des Grenzdrehmoments werden motorisch antreibbare Welle 10 und Werkzeuggehäuseteil 12 durch das Sicherheitselement 1 entkoppelt, so dass die Instrumente 15 zur Nahrungsmittelbearbeitung zuverlässig von der Wellenrotation getrennt werden.

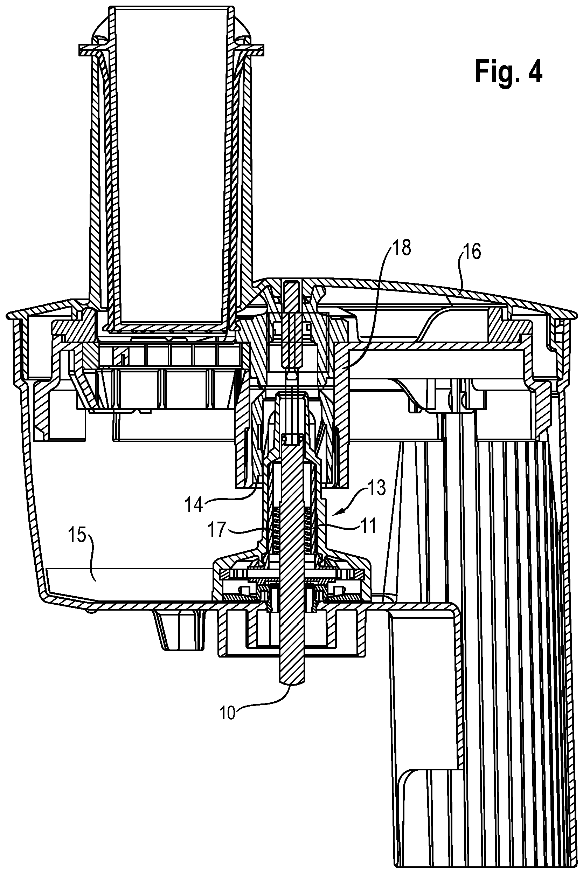

Fig. 4 zeigt eine Komponente einer Küchenmaschine, die ein Werkzeug 13 mit einem Sicherheitselement 1 umfasst und die an einem Gehäuse einer Küchenmaschine angebracht werden kann. Die Antriebswelle 10 des Werkzeugs 13 kann von einem Motor der Küchenmaschine (nicht dargestellt) angetrieben werden. Die Antriebswelle 10 steht mittelbar mit einem Deckel 16 der Küchenmaschine in Verbindung und ist an diesem abgestützt. Wird der Deckel 16 von der Küchenmaschine gehoben, so verschiebt das Rückstellelement 17 die Welle 10 derart aus dem Motorraum heraus, dass die Kopplung zwischen Motor und Welle 10 unterbrochen wird und somit kein Drehmoment mehr zwischen Motor 10 und Instrumenten 15 übertragen werden kann. Die Welle 10 dringt beim Schließen des Deckels 16 wieder in den Motorraum ein und kann dort erneut mittelbar oder unmittelbar am Motor ankoppeln. Das Rückstellelement 17, in diesem Beispiel eine Schraubenfeder, wird koaxial mindestens teilweise von der Hülle 11 umschlossen, die über die Montagelöcher 7 am ersten Kupplungsstück 2 des Sicherheitselements 1 fixiert ist. Auf diese Weise kann also das erfindungsgemäße Sicherheitselement 1 mit einem weiteren Sicherheitselement kombiniert werden.

Wird beim Betrieb des Küchengeräts das Instrument 15 blockiert oder auch beispielsweise durch die Bearbeitung eines zu zähen Guts nahezu blockiert, so erhöht sich zunächst das von der Welle 10 über das erste Kupplungsstück 2, dessen Arme 4, die Wölbungen 5 an der dem ersten Kupplungsstück 2 zugewandten Seite des zweiten Kupplungsstücks 3 auf das zweite Kupplungsstück 3 übertragene Drehmoment, da in einem solchen Fall in der Regel der Motorstrom eines elektrischen Antriebsmotors der Küchenmaschine entsprechend ansteigt. Überschreitet nun das von dem ersten Kupplungsstück 2 auf das zweite Kupplungsstück 3 übertragene Drehmoment ein vorgegebenes Grenzdrehmoment, so lösen sich die kraftschlüssig am zweiten Kupplungsstück 3 abgestützten Arme 4 des ersten Kupplungsstücks 2 aus ihrer drehfesten Lage, so dass das zweite Kupplungsstück 3 nicht mehr vom ersten Kupplungsstück 2 mitgenommen wird. Das Grenzdrehmoment ist so gewählt, dass bei seinem Erreichen noch kein Teil der Küchenmaschine beschädigt werden kann; ferner tritt auch noch keine Überhitzung des Motors auf. Alle Arme 4 des ersten Kupplungsstücks 2 sind derart gestaltet, dass sie sich gleichzeitig aus ihrer drehfesten Lage lösen und im zweiten Kupplungsstück 3 in Drehrichtung der Welle 10 weiterrutschen, so lange, bis das Grenzdrehmoment wieder unterschritten wird. Dabei wird das Sicherheitselement 1 bei Überschreiten des Grenzdrehmoments nicht beschädigt, so dass kein Austausch nach einer Überlastung mehr notwendig ist. Haben sich die Arme 5 aufgrund einer Überschreitung des Grenzdrehmoments aus der drehfesten Lage gegenüber dem zweiten Kupplungsstück 3 gelöst, so wird kein wesentliches Drehmoment mehr übertragen. Die Belastung eines Antriebsgetriebes, des Instrumentes 15 und des Motors nimmt ab, so dass eine Beschädigung dieser Teile vermieden wird.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Sicherheitselement
- 2: Erstes Kupplungsstück
- 3: Zweites Kupplungsstück
- 4: Arm
- 5: Wölbung
- 6: Öffnung
- 7: Montageloch
- 8: Einbuchtung
- 9: Teilmontiertes Werkzeug
- 10: Welle
- 11: Hülle
- 12: Werkzeuggehäuseteil
- 13: Fertigmontiertes Werkzeug
- 14: Verbindungsbereich
- 15: Instrument
- 16: Deckel
- 17: Rückstellelement
- 18: Weiteres Werkzeug

## Patentansprüche

1. Sicherheitselement (1), das ein erstes Kupplungsstück (2) und ein zweites Kupplungsstück (3) umfasst und in einer motorbetriebenen Küchenmaschine mit Bearbeitungswerkzeug genutzt werden kann, wobei das Kupplungsstück (3) an der dem ersten Kupplungsstück (2) zugewandten Fläche Wölbungen (5) zum ersten Kupplungsstück (2) hin aufweist, an denen die Arme (4) des ersten Kupplungsstücks (2) abgestützt sind,
wobei jeder Arm (4) des ersten Kupplungsstücks (2) jeweils an mindestens zwei der Wölbungen (5) an der Innenseite des zweiten Kupplungsstücks (3) abgestützt ist, sodass das erste Kupplungsstück (2) mit dem zweiten Kupplungsstück (3) derart über kraftschlüssig drehfest abgestützte Arme (4) gekoppelt ist, dass sie sich bei Überschreiten eines vorgegebenen Grenzdrehmoments aus dieser drehfesten Lage lösen, **dadurch gekennzeichnet, dass** das erste Kupplungsstück (2) ein anderes Teil koaxial umgibt und axial verschiebbar drehfest aufnimmt wobei das erste Kupplungsstück (2) radial um seinen Schwerpunkt herum eine Mehrzahl von Montagelöchern (7) aufweist, die in gleichen Winkelabständen angeordnet sind, wobei das Sicherheitselement (1) die Möglichkeit bietet, es mit einem weiteren Sicherheitselement mittels der Mehrzahl von Montagelöchern (7) zu kombinieren, dergestalt dass eine zylinderförmige Hülle an den Montagelöchern (7) montiert ist, welche ein Rückstellelement umgibt und dieses wiederum mit einer Welle des Bearbeitungswerkzeugs verbindet, so dass dieses Rückstellelement beim Öffnen des Deckels der Küchenmaschine während des Betriebs seine rückstellende Wirkung an der Welle entfalten kann, wobei das Rückstellelement eingerichtet ist, dass beim Öffnen des Deckels bei laufendem Betrieb der Küchenmaschine die Welle durch das Rückstellelement aus dem Motorraum der Küchenmaschine herausgezogen wird und somit ihr Antrieb gestoppt wird.

2. Sicherheitselement (1) nach Anspruch 1, **dadurch gekennzeichnet, dass** es als Ganzes von der Küchenmaschine gelöst werden kann.

3. Sicherheitselement (1) nach einem der vorhergehenden Ansprüche, **dadurch gekennzeichnet, dass** das erste Kupplungsstück (2) derartig bogenförmige Arme (4) aufweist, dass ihre dem zweiten Kupplungsstück (3) zugewandten Seiten in der Aufsicht abschnittsweise auf einer gemeinsamen Kreiskonturlinie liegen.

4. Sicherheitselement (1) nach einem der vorhergehenden Ansprüche, **dadurch gekennzeichnet, dass** die Arme (4) des ersten Kupplungsstücks (2) rotationssymmetrisch ausgebildet sind.

5. Sicherheitselement (1) nach einem der vorhergehenden Ansprüche, **dadurch gekennzeichnet, dass** das zweite Kupplungsstück (3) drehfest an einem Bearbeitungswerkzeug (13) der Küchenmaschine fixierbar ist.

6. Sicherheitselement (1) nach einem der vorherigen Ansprüche, **dadurch gekennzeichnet, dass** das Sicherheitselement (1) durch den Benutzer ausgetauscht werden kann.

7. Sicherheitselement (1) nach einem der vorhergehenden Ansprüche, **dadurch gekennzeichnet, dass** das Sicherheitselement (1) aus Stahl hergestellt ist.

8. Eine Küchenmaschine mit einem Sicherheitselement (1) nach einem der vorhergehenden Ansprüche.

## Claims

1. Safety element (1), which comprises a first coupling piece (2) and a second coupling piece (3) and can be used in a motor-driven food processor with a processing tool, wherein the coupling piece (3) has curved parts (5) towards the first coupling piece (2) on the area facing towards the first coupling piece (2), against which the arms (4) of the first coupling piece (2) are supported,
wherein each arm (4) of the first coupling piece (2) is supported against at least two of the curved parts (5) on the inner side of the second coupling piece (3) in each case, so that the first coupling piece (2) is coupled to the second coupling piece (3) via arms (4) supported in a force-fit, non-rotating manner in such a way that they are released from said non-rotation position when a predetermined limit torque is exceeded,
**characterised in that** the first coupling piece (2) surrounds another part coaxially, and receives it in an axially displaceable, non-rotating manner, wherein the first coupling piece (2) has a plurality of assembly holes (7) radially around its focal point, which are arranged at equal angular distances, wherein the safety element (1) offers the possibility of combining it with a further safety element by means of the plurality of assembly holes (7), in such a manner that a cylindrical sleeve is mounted on the assembly holes (7), surrounding a reset element and in turn connecting it to a shaft of the processing tool, so that said reset element is able to deploy its resetting effect on the shaft when the lid of the food processor is opened during operation, wherein the reset element is configured such that, when the lid is opened during ongoing operation of the food processor, the shaft is pulled out from the motor chamber of the food processor by the reset element and thus its drive is stopped.

2. Safety element (1) according to claim 1, **characterised in that** it can be released from the food processor as a whole.

3. Safety element (1) according to one of the preceding claims, **characterised in that** the first coupling piece (2) has arms (4) which have such an arched shape that their sides facing towards the second coupling piece (3) lie on a shared circular contour line in sections in a top view.

4. Safety element (1) according to one of the preceding claims, **characterised in that** the arms (4) of the first coupling piece (2) are embodied with rotational symmetry.

5. Safety element (1) according to one of the preceding claims, **characterised in that** the second coupling piece (3) is able to be fixed to a processing tool (13) of the food processor in a non-rotating manner.

6. Safety element (1) according to one of the preceding claims, **characterised in that** the safety element (1) is able to be exchanged by the user.

7. Safety element (1) according to one of the preceding claims, **characterised in that** the safety element (1) is produced from steel.

8. Food processor with a safety element (1) according to one of the preceding claims.

## Revendications

1. Élément de sécurité (1), lequel comporte une première pièce d'accouplement (2) et une deuxième pièce d'accouplement (3) et peut être utilisé dans un robot culinaire à moteur avec un outil de travail, dans lequel la pièce d'accouplement (3) comprend, au niveau de la surface se trouvant en regard de la première pièce d'accouplement (2), des renflements (5) vers la première pièce d'accouplement (2), sur lesquels les bras (4) de la première pièce d'accouplement (2) sont en appui,
dans lequel chaque bras (4) de la première pièce d'accouplement (2) est en appui respectivement sur au moins deux des renflements (5) au niveau de la face intérieure de la deuxième pièce d'accouplement (3), afin que la première pièce d'accouplement (2) soit accouplée à la deuxième pièce d'accouplement (3) par l'intermédiaire de bras (4) en appui, à force, de manière solidaire en rotation, de telle sorte qu'elles se libèrent de cette position solidaire en rotation lorsqu'un couple de rotation limite prédéfini est dépassé, **caractérisé en ce que** la première pièce d'accouplement (2) entoure coaxialement et reçoit de manière solidaire en rotation et de manière axialement coulissante une autre partie, dans lequel la première pièce d'accouplement (2) comprend radialement autour de son centre de gravité une pluralité de trous de montage (7) qui sont disposés à des distances angulaires égales, l'élément de sécurité (1) offrant la possibilité de le combiner à un autre élément de sécurité au moyen de la pluralité de trous de montage (7), de manière à ce qu'un manchon cylindrique qui entoure un élément de rappel et relie celui-ci à son tour à un arbre de l'outil de travail soit monté au niveau des trous de montage (7), de telle sorte que cet élément de rappel puisse déployer son effet de rappel au niveau de l'arbre lors de l'ouverture du couvercle du robot culinaire pendant le fonctionnement, dans lequel l'élément de rappel est conçu de manière à ce que, lors de l'ouverture du couvercle au cours du fonctionnement du robot culinaire, l'arbre soit extrait du compartiment moteur du robot culinaire par l'élément de rappel et son entraînement soit ainsi stoppé.

2. Élément de sécurité (1) selon la revendication 1, **caractérisé en ce qu'**il peut être libéré dans son ensemble du robot culinaire.

3. Élément de sécurité (1) selon l'une des revendications précédentes, **caractérisé en ce que** la première pièce d'accouplement (2) comprend des bras (4) arqués de telle sorte que leurs faces se trouvant en regard de la deuxième pièce d'accouplement (3) se situent dans la vue en plan par endroits sur une ligne de contour commune.

4. Élément de sécurité (1) selon l'une des revendications précédentes, **caractérisé en ce que** les bras (4) de la première pièce d'accouplement (2) sont conçus à symétrie de rotation.

5. Élément de sécurité (1) selon l'une des revendications précédentes, **caractérisé en ce que** la deuxième pièce d'accouplement (3) est fixable de manière solidaire en rotation sur un outil de travail (13) du robot culinaire.

6. Élément de sécurité (1) selon l'une des revendications précédentes, **caractérisé en ce que** l'élément de sécurité (1) peut être remplacé par l'utilisateur.

7. Élément de sécurité (1) selon l'une des revendications précédentes, **caractérisé en ce que** l'élément de sécurité (1) est fabriqué en acier.

8. Robot culinaire avec un élément de sécurité (1) selon l'une des revendications précédentes.
